# EUROPEAN PATENT SPECIFICATION

(11) **EP 2 357 097 B1**
(45) Date of publication and mention of the grant of the patent: **20.06.2012**
(21) Application number: 10382038.7
(22) Date of filing: 17.02.2010
(51) Int. Cl.: B60G 7/00, B60G 21/05

(54) **Control arm for a torsion bar, and torsion bar**
Lenker für einen Drehstab sowie Drehstab
Bras de contrôle d'une barre de torsion et barre de torsion

(43) Date of publication of application: 17.08.2011
(73) Proprietor: Cie Automotive, S.A., 48011 Bilbao (ES)
(72) Inventor: Loizaga Urbistondo, Iñigo, 48011 Bilbao (ES); Azkargorta Biteri, Iker, 48011 Bilbao (ES); Alonso Martinez, Jaime, 48011 Bilbao (ES)
(74) Representative: Carpintero Lopez, Francisco

(56) References cited:
- EP-A1- 0 452 835
- EP-A1- 0 774 369
- DE-A1- 19 825 603
- FR-A3- 2 918 605
- JP-A- 9 175 103
- JP-A- 10 119 504
- JP-A- 58 089 409
- US-A- 4 772 044
- US-A- 6 099 084
- US-A1- 2004 070 129

## Description

### Technical Field of the Invention

The invention is comprised in suspension systems for vehicles, especially in the field of rear suspensions based on twist beam axles.

### Background of the Invention

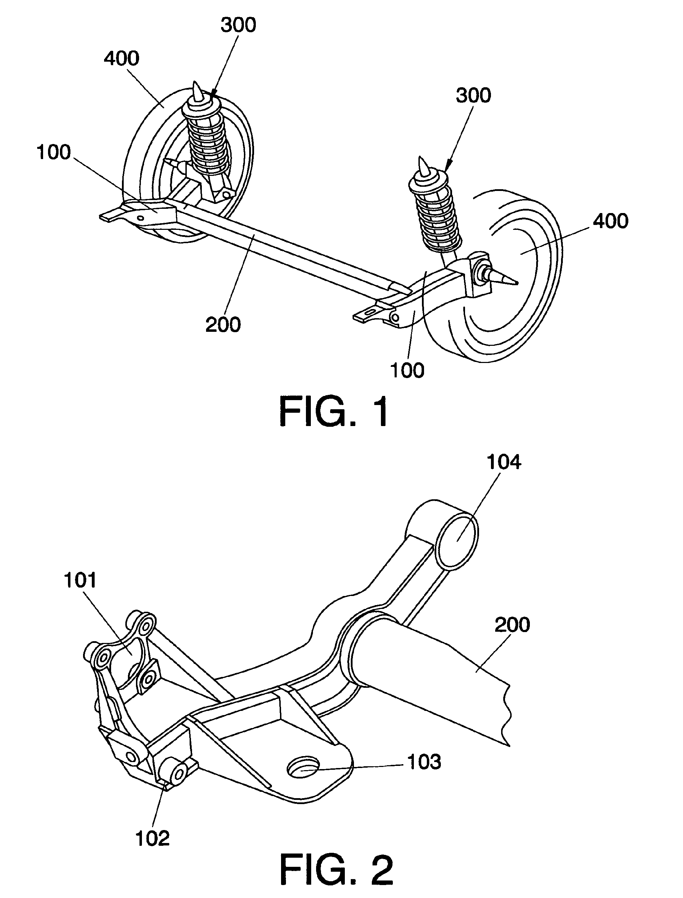

Within the different types of rear suspension used in current vehicles, there is a solution which combines dynamic features and cost in a very efficient manner. This solution is what is known as twist beam axle or semi-independent axle. Figure 1 shows the general configuration of a twist beam axle, according to the state of the art. The twist beam axle basically comprises a central crosspiece 200 and two side control arms 100, one at each end of the central crosspiece 200. Shock absorbing elements 300 and the wheels 400 are coupled to said control arms, as is schematically shown in Figure 1.

The central crosspiece 200 can have a tubular or open shape and provides functions which are provided by the stabilizer bar in other suspension systems. Furthermore, it allows giving a torsional strength or rigidity to the axle. In some cases the use of a stabilizer bar is not eliminated.

Figure 2 schematically shows an example of a control arm 100 for this type of twist beam axle. The control arm is assembled at the end of the central crosspiece 200 and has a wheel coupling point or area 101, a shock absorber coupling point 102, a damper spring coupling point 103, and a chassis attachment point 104, through some type of vibration damping element. There can be other elements additional to those which are attached, such as Watt bars or others which generate more complex derivatives of the twist beam axle solution.

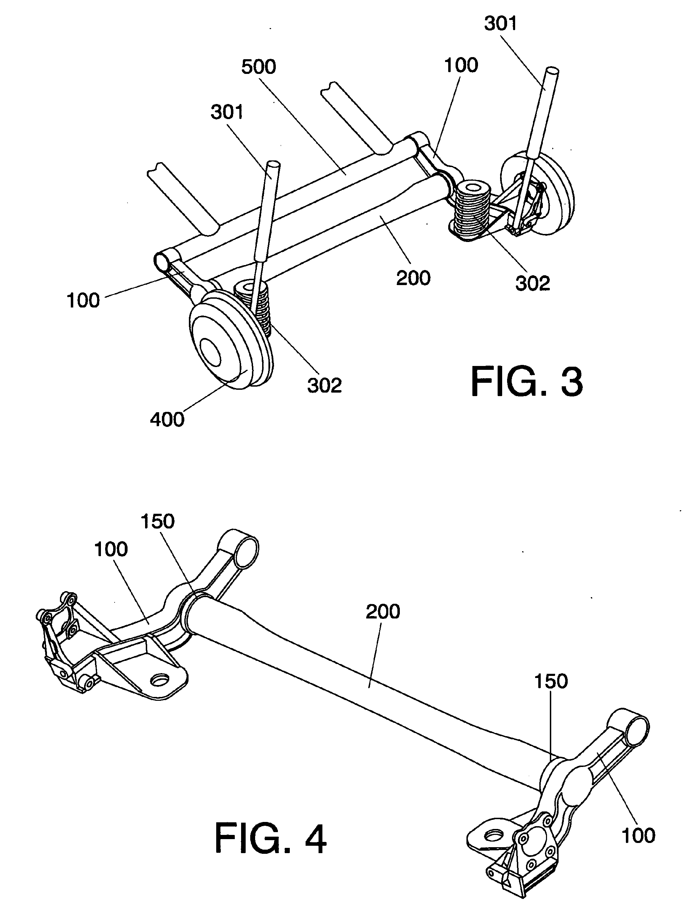

Figure 3 shows a typical configuration of a rear twist beam axle, with the central crosspiece 200 and the control arms 100, to which the wheels 400, the shock absorbers 301, the damper springs 302, as well as a chassis structure 500 are attached.

According to the state of the art, the control arm can be formed by an assembly of press-formed steel parts, attached by welding, or by a single cast iron part, which can be attached to the crosspiece (which is normally of steel) by means of MIG or MAG type welding or, in the case of the cast iron arms, by magnetic arc (although there can also be other types of attachment by welding or by means of mechanical attachment elements). Figure 4 schematically shows the basic components of the twist beam axle, with the central crosspiece 200 attached to the control arms 100 by means of respective attachments 150.

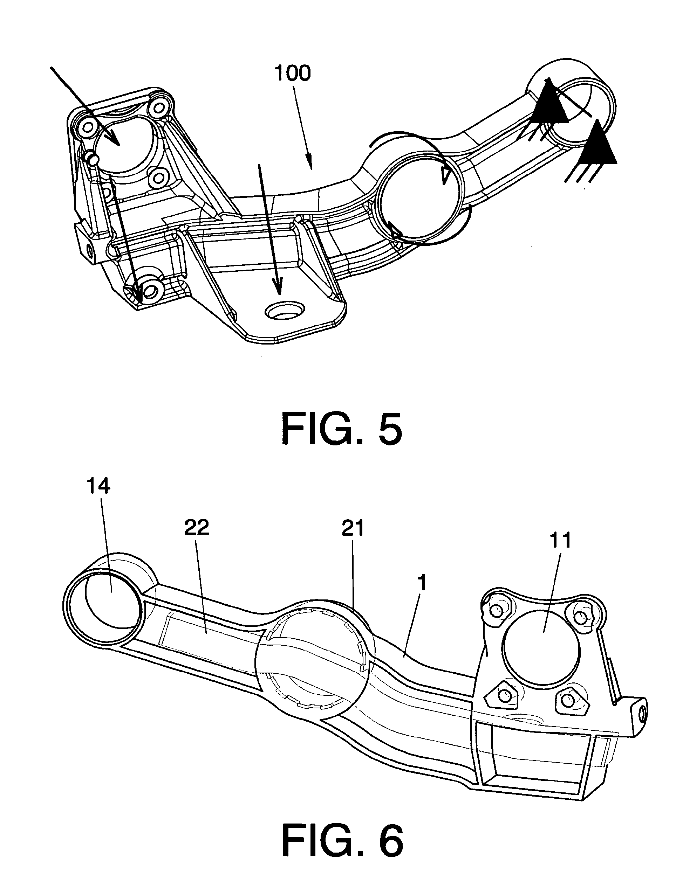

Due to the different stresses entering the axle through the wheels, the control arm 100 is subjected to different loading configurations which it has to withstand during the life of the vehicle, and which can lead to final positions opposite the left and right arms, making the crosspiece 200 work under torsion mainly, although it also withstands a certain bending component. This, in turn, makes it necessary to transmit considerable torsional moments and other large stresses in the attachment between the control arm 100 and the crosspiece 200. On the other hand, within the control arm 100 itself there are loads entering through the wheel, an anchoring point in the chassis attachment area, moments coming from the crosspiece and forces coming from the shock absorber and from the damper spring, as schematically shown in Figure 5. This makes the control arm have to withstand considerable torsional and bending moments.

EP-A-0774369 discloses an arrangement substantially according to the preamble of claim 1.

EP-A-0452835, JP-A-09-175103, FR-A-2918605 and US-A-6099084 disclose other examples of prior art vehicle axles and suspension systems.

### Description of the Invention

Although known twist beam axles work reasonably well, it has been considered that it may be desirable to reduce their weight, but without relinquishing their capacity to fulfill their functions in the vehicle.

Therefore, it has been considered that it could be interesting to make the control arms in a more lightweight material than that which is conventionally used for these control arms. For example, it has been considered that it could be interesting to make the arms in a relatively lightweight material, such as aluminium or an alloy with a substantial aluminium component. For example, the arms could be made drawn from aluminium, by means of processes of semi-solid state casting, gravity casting (either in metal or waste mold) or low-pressure casting (in a metal or waste mold).

However, it has been detected that the use of aluminium can involve a problem at the time of attaching the arm to the crosspiece, given the difficulty of welding materials as different as steel and aluminium. On the other hand, the rigidity of the control arm against the aforementioned stresses and its resistance to all the loading cases presented is another issue to be taken into account when choosing the material for the arm.

A first aspect of the invention relates to a control arm for a twist beam axle for a vehicle, which comprises a first part of a first material. According to the invention, the control arm furthermore comprises a second part of a second material, said first material being more lightweight than said second material.

The use of a hybrid structure with two different materials allows optimizing the structure. For example, the first material can be used for the greater part of the control arm to reduce its weight, while at the same the other material, although it is heavier, can be used for certain parts of the control arm, for example, to reinforce it and increase its resistance, and/or to facilitate its reliable attachment to the central crosspiece.

The first material can be aluminium. In this document, aluminium also means alloys the main component of which is aluminium, especially silicon-based aluminium alloys, with silicon percentages between 5 and 13% by weight and magnesium between 0.2 and 5% by weight, which correspond, among others, to the range of alloys A356, 356, A357, 357, 206 and A514, with the incorporation of other alloy elements facilitating the use of secondary aluminiums such as copper up to 5% and iron up to 2%. Other alloys of the 6000 (AA6061, AA6082) and 7000 series can also be used.

This material can be suitable, for example, due to its weight (it has a low density), and at the same time it has suitable mechanical characteristics for forming this type of element.

The second material can be steel. Said steel will have, for a flat product, mechanical properties superior to those of the aluminium alloy, in the event of introducing a tubular product, it can be a tube with or without welding, also with properties superior to those of the aluminium alloy.

Part of the inserts can also be based on an aluminium extrusion tube or flat product, in which case the main function will be to generate hollows to eliminate material and increase the weight reduction.

The use of the second material (for example, steel) is essential in a part of the control arm so that it can be easy to achieve an attachment between the second part and the central crosspiece of the twist beam axle, by means of welding, for example, MIG or MAG type welding. On the other hand, the steel can also serve to reinforce the aluminium structure.

The weight of the inserts can be greater than 5% of the weight of the control arm.

The first part can envelop, at least partially, the second part. The second part is thus confined in the first part, which improves the integrity of the arm and reduces the risk of the first part being separated from the second part. The second part can thus form a type of core of the first part.

For example, the first part can have been molded on the second part, such that the second part has been at least partially enveloped in the first part.

The first part can comprise a wheel coupling area for coupling a wheel, and/or a shock absorber coupling area for coupling a shock absorber, and/or a damper spring coupling area for coupling a damper spring, and/or a vehicle chassis attachment area for the attachment to a chassis of a vehicle, as is conventional in this type of control arm.

The second part comprises an attachment element configured to be welded to a central crosspiece of a twist beam axle. The attachment between the control arm and the central crosspiece can thus be carried out without its quality depending on the compatibility between the first material and the material of the crosspiece, since the welding is established between the second material and the material of the crosspiece; these two materials can be the same or similar (for example, steel), or at least compatible such that a quality attachment by welding can be established.

The attachment element can have a general substantially annular shape, for example, in the form of a circular or polygonal ring. This shape can be suitable from both a manufacturing point of view and for facilitating a good attachment to the central crosspiece.

The second part comprises an elongated reinforcement element extending (for example, longitudinally) through the first part. The reinforcement element can serve to assure that the control arm has sufficient rigidity and/or resistance. This reinforcement element, which can serve as a core of the control arm, has a tube shape, whereby the control arm can be internally hollow. Due to the fact that the control arm must withstand different torsional and bending moments, in order for the material to be effective in its resistance function, it must be in the external area of the arm to increase the moments of inertia with respect to torsion and bending. The material in the center is not very effective and in a solution seeking weight reduction its elimination may be recommendable.

The elongated reinforcement element can be attached to the attachment element, for example, by means of welding and/or by mechanical coupling due to the geometry of the parts. The attachment between the attachment element and the reinforcement element can serve to assure that there is a continuity in the transmission of forces. The use of two elements which are previously manufactured and then attached to one another instead of a single "one-body" element can facilitate the production of these components.

The reinforcement element is a tubular element, for example, an elongated tube with a circular or polygonal, for example, square or rectangular, cross-section. Since in some modes of the invention, the first part (for example, of aluminium) is overmolded on the second part (for example, of steel), in the cases in which the reinforcement element is a tubular element, it may be convenient to close the ends of the tube to prevent the first material from entering therein; for example, metal covers can be applied or the ends of the tube can be closed by deformation. It is also possible to leave the ends of the tube outside the cavity of the mold so that the first material is not introduced inside the tube.

The second part can comprise a plurality of orifices to improve the coupling between the first part and the second part, by the entrance of the first material in said orifices. Alternatively or complementarily, the second part can comprise a plurality of projection and/or one or several toothed areas, configured to improve the coupling between the first part and the second part. Given that the melting points of the first material and of the second material can be very different, as is the case with aluminium and steel, there is no close attachment by melting or rediffusion between both materials. Therefore, a maximization of contact in a direction perpendicular to the force in the interface to prevent the sliding between the first part and the second part can be sought. The use of projections, toothed areas or other geometric shapes, and/or the use of holes or orifices allowing the first material to enter the second part such that the first part and the second part are interlinked, can serve to improve the attachment and the stress transmission capacity.

The invention also relates to a twist beam axle comprising a central crosspiece and two control arms according to what has been described above, in which the central crosspiece is attached to the second parts of said control arms by means of welding.

### Description of the Drawings

To complement the description and for the purpose of aiding to better understand the features of the invention according to a referred practical embodiment thereof, a set of figures is attached as an integral part of the description, in which the following has been depicted with an illustrative and nonlimiting character:
Figures 1-4 show different views of a twist beam axle according to the state of the art.
Figure 5 schematically shows different forces affecting the control arm of a twist beam axle.
Figures 6 and 7 show schematic perspective views of a control arm according to a possible embodiment of the invention.
Figures 8 and 9 show schematic perspective views of the second part of a control arm according to this embodiment of the invention.
Figure 10 shows a detail of a control arm according to a variant of this embodiment of the invention, in which an element of the second part has orifices to improve the attachment with the first part of the control arm.
Figure 11 schematically shows a cross-section of the first part of the control arm.
Figure 12 shows a perspective view of a twist beam axle according to a possible embodiment of the invention.

### Preferred Embodiment of the Invention

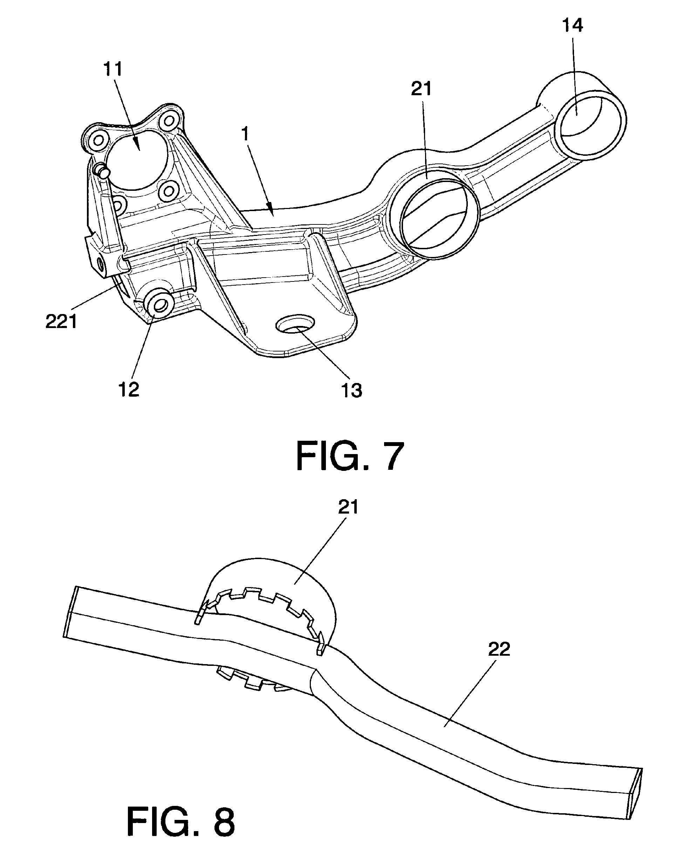

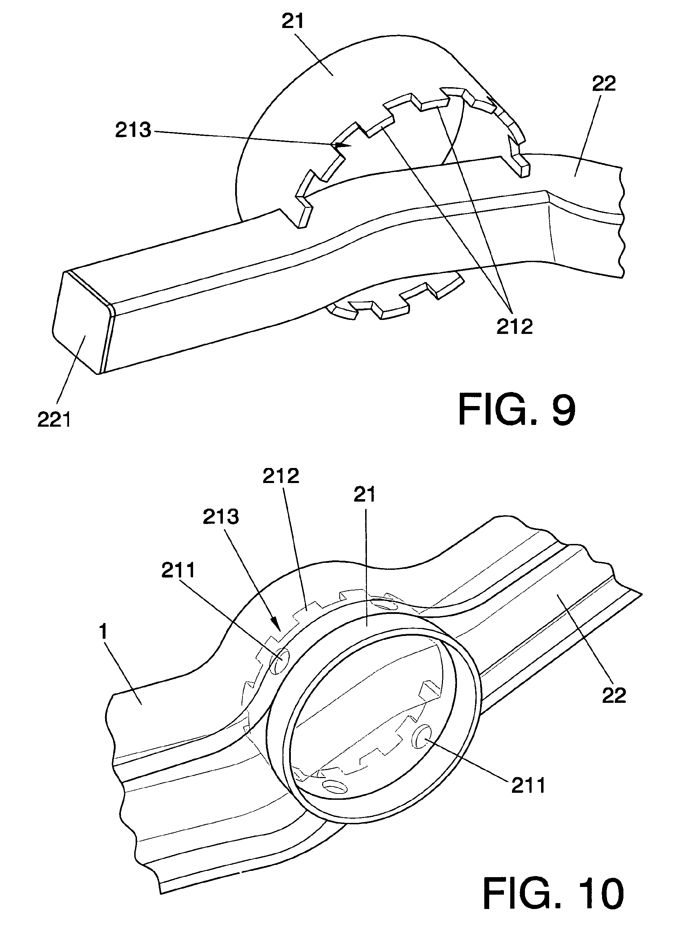

Figures 6 and 7 schematically show a control arm according to a possible embodiment of the invention, and which comprises a steel part comprising an annular-shaped attachment element 21, and a reinforcement element 22 in the form of a tube with a square cross-section (see also Figures 8 and 9 which show these two elements), attached to one another by mechanical fitting (as seen in Figure 9) and/or by welding. The tube 22 has an end closed with a cover 221.

This steel part 21-22 is housed inside an aluminium body 1, which has been molded around the steel elements, according to any suitable process for shaping the aluminium and enveloping the steel elements. In this case, as can be observed in Figure 7, an end of the steel tube 22 emerges through an end of the aluminium body 1, and part of the attachment element 21 emerges through a side of the aluminium body. The aluminium body forms a wheel coupling area (11) for coupling a wheel, a shock absorber coupling area (12) for coupling a shock absorber, a damper spring coupling area (13) for coupling a damper spring and a vehicle chassis attachment area (14) for the attachment to a chassis of a vehicle. However, in other embodiments of the invention, one or several of these areas can be formed from steel elements.

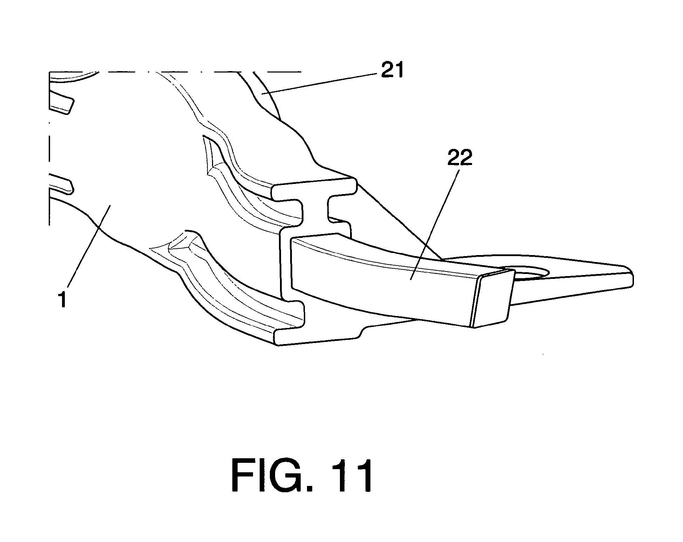

Figure 11 shows how the tube 22 is housed inside the aluminium body 1, forming a longitudinal reinforcement thereof.

In, for example, Figure 9 it can be observed how the attachment element 21 has a toothed area 213 with a plurality of projections 212 in the form of teeth. This configuration serves to improve the coupling between the steel structure and the aluminium body 1 in which it is housed. In a variant which can be observed in Figure 10, the attachment element also comprises a plurality of orifices 211, into which the aluminium penetrates, thus improving the coupling between the steel structure and the aluminium structure.

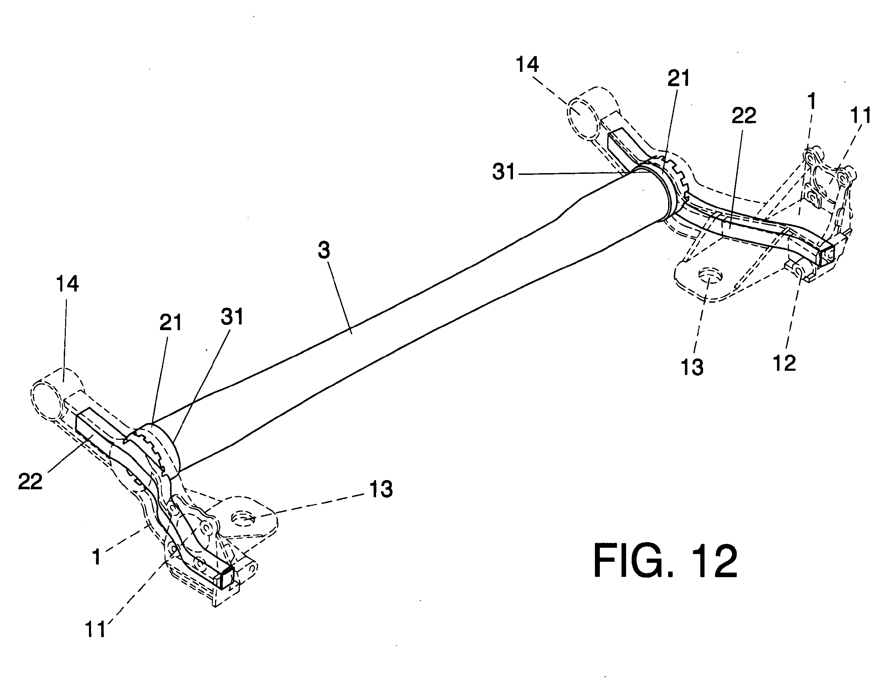

Figure 12 schematically shows a twist beam axle comprising two arms according to what has been described above, attached to a central crosspiece 3 by means of weldings 31.

The invention is not limited to the specific embodiments which have been described.

Different modifications can be made by the person having ordinary skill in the art without departing from the scope of the invention which is defined by the appended claims.

## Claims

1. Control arm for a twist beam axle for a vehicle, comprising a first part (1) of a first material and a second part (21, 22) of a second material, said first material being more lightweight than said second material,
wherein the second part comprises an attachment element (21) configured to be welded to a central crosspiece of a twist beam axle;
**characterized in that**
the second part additionally comprises an elongated reinforcement element (22) extending through the first part (1) and which is attached to the attachment element (21), wherein said reinforcement element (22) is a tubular element.

2. Control arm according to claim 1, wherein the first material is aluminium.

3. Control arm according to claim 1 or 2, wherein the second material is steel.

4. Control arm according to any of the previous claims, wherein the first part (1) envelops, at least partially, the second part (21, 22).

5. Control arm according to claim 4, wherein the first part (1) has been molded on the second part (21, 22), such that the second part (21, 22) has been at least partially enveloped by the first part (1).

6. Control arm according to any of the previous claims, wherein the first part comprises a wheel coupling area (11) for coupling a wheel and/or a shock absorber coupling area (12) for coupling a shock absorber and/or a damper spring coupling area (13) for coupling a damper spring and/or a vehicle chassis attachment area (14) for the attachment to a chassis of a vehicle.

7. Control arm according to any of the previous claims, wherein the attachment element (21) has a general substantially annular shape.

8. Control arm according to any of the previous claims, wherein the second part comprises an elongated reinforcement element (22) extending through the first part (1).

9. Control arm according to any of the previous claims, wherein the second part (21, 22) comprises a plurality of orifices (211) to improve the coupling between the first part (1) and the second part, by the entrance of the first material in said orifices.

10. Control arm according to any of the previous claims, wherein the second part (21, 22) comprises a plurality of projections (212) configured to improve the coupling between the first part (1) and the second part (21, 22).

11. Control arm according to any of the previous claims, wherein the second part (21, 22) comprises at least one toothed area (213) configured to improve the coupling between the first part (1) and the second part (21, 22).

12. Twist beam axle comprising a central crosspiece (3) and two control arms according to any of the previous claims, wherein the central crosspiece is attached to the second parts (21, 22) of said control arms by means of welding.

## Patentansprüche

1. Steuerarm für eine Verbundlenkerachse für ein Fahrzeug, der einen ersten Teil (1) aus einem ersten Werkstoff und einen zweiten Teil (21, 22) aus einem zweiten Werkstoff aufweist, wobei der erste Werkstoff leichter ist als der zweite Werkstoff,
wobei der zweite Teil ein Befestigungselement (21) aufweist, das konfiguriert ist, um an einen zentralen Querteil einer Verbundlenkerachse geschweißt zu werden,
**dadurch gekennzeichnet, dass**
der zweite Teil zusätzlich ein längliches Verstärkungselement (22) aufweist, das sich durch den ersten Teil (1) erstreckt und an dem Befestigungselement (21) befestigt ist, wobei das Verstärkungselement (22) ein röhrenförmiges Element ist.

2. Steuerarm nach Anspruch 1, wobei der erste Werkstoff Aluminium ist.

3. Steuerarm nach Anspruch 1 oder 2, wobei der zweite Werkstoff Stahl ist.

4. Steuerarm nach einem der vorhergehenden Ansprüche, wobei der erste Teil (1) den zweiten Teil (21, 22) wenigstens teilweise umschließt.

5. Steuerarm nach Anspruch 4, wobei der erste Teil (1) auf dem zweiten Teil (21, 22) derart geformt wurde, dass der zweite Teil (21, 22) wenigstens teilweise von dem ersten Teil (1) umschlossen wurde.

6. Steuerarm nach einem der vorhergehenden Ansprüche, wobei der erste Teil einen Radkopplungsbereich (11) zum Koppeln eines Rads und/oder einen Stoßfängerkopplungsbereich (12) zum Koppeln eines Stoßfängers und/oder einen Dämpffederkopplungsbereich (13) zum Koppeln einer Dämpffeder und/oder einen Fahrzeugchassisbefestigungsbereich (14) zum Befestigen an einem Chassis eines Fahrzeugs aufweist.

7. Steuerarm nach einem der vorhergehenden Ansprüche, wobei das Befestigungselement (21) eine allgemein im Wesentlichen ringförmige Form hat.

8. Steuerarm nach einem der vorhergehenden Ansprüche, wobei der zweite Teil ein längliches Verstärkungselement (22) aufweist, das sich durch den ersten Teil (1) erstreckt.

9. Steuerarm nach einem der vorhergehenden Ansprüche, wobei der zweite Teil (21, 22) eine Vielzahl von Öffnungen (211) aufweist, um das Koppeln zwischen dem ersten Teil (1) und dem zweiten Teil durch das Eintreten des ersten Materials in diese Öffnungen zu verbessern.

10. Steuerarm nach einem der vorhergehenden Ansprüche, wobei der zweite Teil (21, 22) eine Vielzahl von Vorsprüngen (212) aufweist, die konfiguriert sind, um das Koppeln zwischen dem ersten Teil (1) und dem zweiten Teil (21, 22) zu verbessern.

11. Steuerarm nach einem der vorhergehenden Ansprüche, wobei der zweite Teil (21, 22) mindestens einen gezahnten Bereich (213) aufweist, der konfiguriert ist, um das Koppeln zwischen dem ersten Teil (1) und dem zweiten Teil (21, 22) zu verbessern.

12. Verbundlenkerachse, die einen zentralen Querteil (3) und zwei Steuerarme nach einem der vorhergehenden Ansprüche aufweist, wobei der zentrale Querteil an den zweiten Teilen (21, 22) der Steuerarme durch Schweißen befestigt ist.

## Revendications

1. Bras de contrôle pour un essieu rigide de torsion pour un véhicule, comprenant une première partie (1) en un premier matériau et une seconde partie (21, 22) en un deuxième matériau, ledit premier matériau étant plus léger que ledit deuxième matériau,
où la seconde partie comprend un élément de fixation (21) configuré pour être soudé à une traverse centrale d'un essieu rigide de torsion;
**caractérisé en ce que**
la seconde partie comprend additionnellement un élément de renforcement oblong (22) s'étendant à travers la première partie (1) et qui est fixé à l'élément de fixation (21), où ledit élément de renforcement (22) est un élément tubulaire.

2. Bras de contrôle selon la revendication 1, où le premier matériau est l'aluminium.

3. Bras de contrôle selon la revendication 1 ou 2, où le deuxième matériau est l'acier.

4. Bras de contrôle selon l'une quelconque des revendications précédentes, où la première partie (1) enveloppe, au moins partiellement, la seconde partie (21, 22).

5. Bras de contrôle selon la revendication 4, où la première partie (1) a été moulée sur la seconde partie (21, 22) de sorte que la seconde partie (21, 22) a été au moins partiellement enveloppée par la première partie (1).

6. Bras de contrôle selon l'une quelconque des revendications précédentes, où la première partie comprend une zone de couplage de roue (11) pour le couplage d'une roue et/ou une zone de couplage d'amortisseur (12) pour le couplage d'un amortisseur et/ou une zone de couplage de ressort amortisseur (13) pour le couplage d'un ressort amortisseur et/ou une zone de fixation de châssis de véhicule (14) pour la fixation à un châssis d'un véhicule.

7. Bras de contrôle selon l'une quelconque des revendications précédentes, où l'élément de fixation (21) a une forme générale sensiblement annulaire.

8. Bras de contrôle selon l'une quelconque des revendications précédentes, où la seconde partie comprend un élément de renforcement oblong (22) s'étendant à travers la première partie (1).

9. Bras de contrôle selon l'une quelconque des revendications précédentes, où la seconde partie (21, 22) comprend une pluralité d'orifices (211) pour améliorer le couplage entre la première partie (1) et la seconde partie, par l'entrée du premier matériau dans lesdits orifices.

10. Bras de contrôle selon l'une quelconque des revendications précédentes, où la seconde partie (21, 22) comprend une pluralité de saillies (212) configurées pour améliorer le couplage entre la première partie (1) et la seconde partie (21, 22).

11. Bras de contrôle selon l'une quelconque des revendications précédentes, où la seconde partie (21, 22) comprend au moins une zone dentée (213) configurée pour améliorer le couplage entre la première partie (1) et la seconde partie (21, 22).

12. Essieu rigide de torsion comprenant une traverse centrale (3) et deux bras de contrôle selon l'une quelconque des revendications précédentes, où la traverse centrale est fixée aux secondes parties (21, 22) desdits bras de contrôle par soudage.
